# EUROPEAN PATENT SPECIFICATION

(11) **EP 0 530 890 B1**
(45) Date of publication and mention of the grant of the patent: **14.06.1995**
(21) Application number: 92202528.3
(22) Date of filing: 18.08.1992
(51) Int. Cl.: F16C 3/10, F16D 1/06

(54) **Shaft assembly and method of assembly**
Gebaute Welle und Verfahren zu ihrer Herstellung
Arbre et son procédé d'assemplage

(30) Priority: 03.09.1991 US 753553; 03.09.1991 US 753554
(43) Date of publication of application: 10.03.1993
(73) Proprietor: GENERAL MOTORS CORPORATION, Detroit Michigan 48202 (US)
(72) Inventor: Arnold, Philip Dale, Mt Clemens, Michigan 48013 (US); Kaywood, Roy Glenn, Stockbridge, Michigan 49285 (US)
(74) Representative: Denton, Michael John

(56) References cited:
- DE-A- 3 809 369
- DE-B- 1 270 893
- GB-A- 724 025
- US-A- 4 835 832
- PATENT ABSTRACTS OF JAPAN vol. 9, no. 164 (M-395)(1887) 10 July 1985

## Description

This invention relates to a shaft, for example an engine crankshaft, and particularly to shafts assembled from individual parts.

It is known in the art relating to crankshafts for internal combustion engines to make one-piece castings or forgings which entail considerable machining to remove large quantities of excess metal to provide crank pins, main journals, and crank arms or counterweights. When the crankshaft is intended for use in a two-stroke engine, seal plates must also be provided, which requires substantially more machining if the entire crankshaft is to remain as one piece. Otherwise, the seal plates must somehow be separately assembled.

It is also known that by assembling the crankshaft from many separate elements, much of the machining can be eliminated and the remaining machining performed on small simple elements such as pins, counterweights and seal plates. The elements are then joined together by, for example, bolting or by a press-fit so as to assemble the entire crankshaft. The most appropriate way of joining the elements depends on the particular application or load requirements of the assembly. One type of joint, such as main journal to counterweight connection, may be assembled by one method, while the crank pins, for example, could be joined to counterweights by another method.

A simple and effective method of joining parts on a common shaft is shown in US-A-4,835,832 entitled "Method of Assembling Tubular Shaft Assemblies". This method involves positioning hollow parts, such as cams of a camshaft, on a tube and expanding the tube to hold the parts by clamping the ends of the tube to prevent longitudinal growth and forcing a ball through the tube which is larger than the original diameter of the tube. The hollow parts have an inner cross-section in the form of a lobe to receive the expanded outer diameter of the tube and include splines to hold the part against rotation on the tube.

The present invention seeks to provide an improved shaft and method of assembly thereof.

According to an aspect of the present invention, there is provided a shaft as specified in claim 1.

The invention can provide an assembled crankshaft with improved joints which are easy to assemble. The invention may also provide an oil passage arrangement for an assembled crankshaft which can require no special indexing upon assembly.

According to another aspect of the present invention, there is provided a method of fitting a tubular element to a member as specified in claim 16.

Development work on extending the above method to the joining of crankshaft parts has led to the method of claim 16 which is improved at least for some applications, over that disclosed in US-A-4,835,832. This improved joining method can be used advantageously for joining crank pins and/or main journals to counterweights, yielding an assembled crankshaft with a new and improved joint structure. As will be apparent, the method can be used for coupling any tubular member to an apertured member.

An additional advantage of an assembled crankshaft over a one-piece crankshaft is that design for oil passages is more flexible, using shorter passages and passages which are normal to the surface at entry or exit points, thus minimizing the passage aperture at bearing surfaces. It has previously been proposed to form oil passages in main bearings and crankpins which exit at the end of the bearing or pin adjacent the counterweight, and to form a diagonal oil passage through the counterweight which connects the bearing and pin passages. To make the connection, the parts must be precisely aligned on assembly so as to align each of the bearing passage and the crank pin passage with the diagonal passage in the counterweight.

An embodiment of the present invention is given below, by way of illustration only, with reference to the accompanying drawings, in which:
Figure 1 is a side view of a crankshaft formed on the basis of an embodiment of the invention;
Figure 2 is a cross-sectional view of a crank pin of the crankshaft of Figure 1;
Figures 3a and 3b are cross-sectional views of intermediate and end main journals of the crankshaft of Figure 1;
Figure 4 is an end view of a counterweight of the crankshaft of Figure 1;
Figure 5 is a side view of a seal plate of the crankshaft of Figure 1;
Figure 6 is a graphical representation of the development of a tri-lobed configuration as used for the apertures of the counterweight of Figure 4;
Figure 7 is an isometric view of a portion of the counterweight of Figure 4 showing details of a tri-lobed aperture of Figure 6;
Figure 8a is a cross-sectional view of a crank pin assembled on counterweights;
Figure 8b is a cross-sectional view of the counterweight of Figure 8a without a crank pin;
Figure 9 is an isometric view of a crankshaft assembly fixture and a portion of a crankshaft illustrating an embodiment of assembly method;
Figure 10 is a side view of an assembly fixture used with the fixture of Figure 9;
Figure 11 is a cross-sectional view of a portion of a crankshaft incorporating oil passages; and
Figure 12 is an isometric view of a journal of the crankshaft of Figure 11.

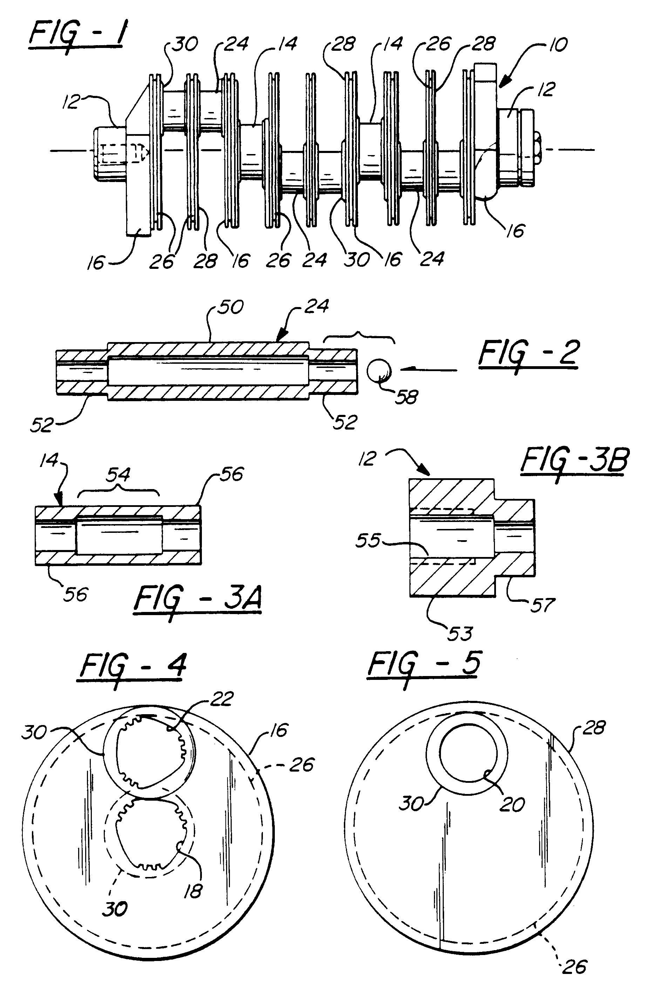

Referring to Figures 1-5, a crankshaft 10 for a six cylinder two-stroke engine comprises end main journals 12, two intermediate main journals 14, counterweights or crank arms 16 coupled through axial centre apertures 18 to one end of each end journal 12 and both ends of intermediate main journals 14 as well as through off-axis apertures 22 to both ends of crank pins 24. Each counterweight 16 is circular and has a circumferential groove 26 for receiving a seal, not shown. Additionally, a circular seal plate 28 is attached to each of the crank pins 24 midway between its supporting counterweights 16 and has a circumferential groove 26, also for receiving a seal. The seal plates 28 have circular off-axis apertures 20 for attachment to the crank pins 24 by a shrink fit. The various seals cooperate with a circular opening of webs in the engine crankcase to separate the crankcase into compartments for managing the flow of intake air and exhaust.

For small two-stroke engines which do not require a compartmentalized crankcase or for four-stroke engines, the seal plates 28 and the grooved circular counterweights 16 are not necessary, and conventionally shaped counterweights may be used instead. In either case, roller bearings and connecting rods are assembled to the crank pins 24 prior to assembly with the counterweights so that a one-piece connecting rod and a non-split roller bearing cage can be used. Likewise, roller bearings are assembled to the main journals 14 prior to assembly. The surface of the crank pins 24 and the main journals 12, 14 are hardened to 60-62 Rockwell C to serve as inner races of the roller bearings. Hardened thrust faces 30 on the counterweights and seal discs prevent the roller bearings from moving axially, and also guide the connecting rods. In two-stroke engines the lubrication to the bearings is provided by a fine mist of oil carried into the crankcase by the air supply. In four-stroke engines, oil passages formed in the crankshaft between the main journals and the crank pins are coupled with an oil galley in the cylinder block for lubricating the crank pin bearings.

The main journals 12, 14 and crank pins 24 are joined to apertures 18,22 in the counterweights by an improved form of an expansion technique explained in its fundamental form in US-A-4,835,832 and which entails forming an aperture in each of a number of outer elements (such as cams), which aperture is lobular in cross-section and has an uneven number of lobes such as three or five; inserting a tube through the apertures of the outer elements; holding the ends of the tube against axial elongation; and mechanically expanding the tube to fill the cross-section of the apertures, thereby securing the outer elements to the tube. Preferably the mechanical expansion is performed by forcing a hardened ball through the tube, the ball being a few tens of micrometres (a few thousandths of an inch) larger in diameter than the inner diameter of the tube. Reference may be had to US-A-4,835,832 for further details.

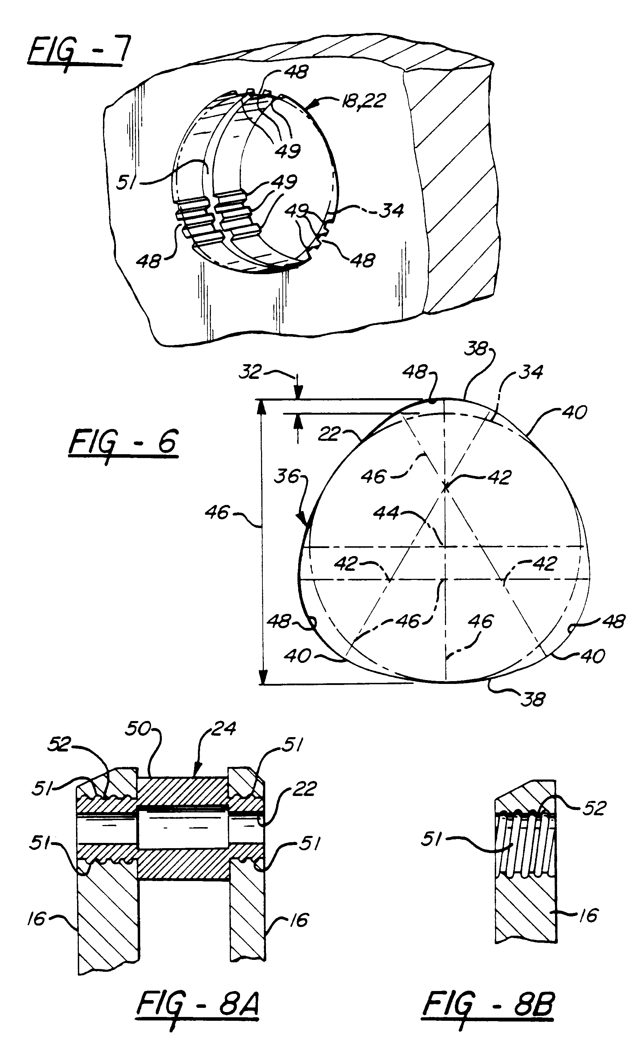

In Figure 6 a graphical illustration, taken from aforesaid US-A-4,835,832, of the development of a tri-lobed figure is shown having an eccentricity 32 measured from a circle 34 defining the minimum radius of the tri-lobed perimeter 36. The developed perimeter 36 is made up of blended tangent swing radii in the form of a series of alternating long arcs 38 and short arcs 40 which are drawn from three equally spaced centres 42 spaced about the true centre 44 of the figure. The result is that the perimeter has an overall uniform height or width 46 in any direction. For simplicity, this is generally referred to as a uniform diameter 46 although it should be understood that this uniform diameter dimension passes sequentially through each of three centres 42 and only passes through the true centre 44 when the diameter is at the midpoints of two opposing long and short arcs 38,40. Thus each set of long and short arcs forms a lobe 48. The eccentricity 32 of each lobe is of the order of 0.25 to 0.5 millimetres (0.010 to 0.020 inches), although a greater eccentricity may be used. The lobes 48 provide torque capacity to the joint and splines may be added, as discussed below, to enhance torque capacity further.

The improved or second generation tube expansion technique utilizes the lobed aperture described in Figure 6 and adds some other features. First, the tube which extends through openings of all the elements is eliminated and each crank pin 24 or main journal 12,14 has an integral tubular extension which is inserted into the corresponding lobed aperture of the counterweight and expanded to form the joint. Thus the crank pin 24 of Figure 2 has a surface hardened crank pin body portion 50 and two crank pin end or joining portions 52 of reduced diameter which are not hardened. The intermediate main journal 14 of Figure 3a has a hardened main journal body portion 54 and two main journal end or joining portions 56 of the same diameter as the main journal body portion which are not hardened. The end main journal 12 of Figure 3b has a hardened main journal body portion 53 with an internally threaded bore 55 and one non-hardened main journal end or joining portion 57 of reduced diameter.

It will be apparent that either the crank pin or the main journal may have a reduced end portion or non-reduced end portion. A second improvement is that the mechanical expansion is selective, affecting only a portion of the tubular element through which the ball is passed. To carry out the selective expansion, the body portion 50 or 54 has a larger inner diameter than the end portions 52 or 56, and the ball 58 which passes through the crank pin or main journal is of intermediate size, being larger than the internal diameter of the end portions and smaller than the internal diameter of the body portions. A third improvement is that instead of effecting the expansion by a single pass of a ball, three balls of successively larger diameters are used sequentially to expand the end portions in stages, creating greater deformation with less force. A fourth improvement involves making undercuts, such as circumferential or helical grooves, in the aperture to resist axial movement when the metal of the end portion has been expanded into the undercut.

Figure 7 shows a typical aperture 18,22 in a counterweight for receiving either a crank pin 24 or a main journal 12, 14. The lobes 48 of the aperture are each provided with a few splines 49 extending parallel to the shaft axis. The eccentricity of each lobe and the form of each spline provide good torque capacity when assembled with the crank pin 24 or main journal 12, 14. The height of each spline 49 may be the same as the eccentricity. A circumferential groove 51 in the aperture 18,22 has a depth of about 0.4 millimetres (0.015 inches) and a width of about 0.8 millimetres (0.030 inches). Several grooves may be provided to increase the axial strength.

As shown in Figure 8a, which shows the crank pin 24 assembled to counterweights 16 without a seal plate, the metal forming the crank pin end portion on assembly fills the or each groove 51 to secure the joint against axial separation. The off-axis aperture is hardened to about 40 Rockwell C, while the crank pin end portion is not hardened, so as to assure that the crank pin end portion will expand into conformity with the off-axis aperture 22. As indicated in Figures 8a and 8b, the groove 51 may have a helical form.

The crank pin 24 may have typical crank pin body portion 50 dimensions of 38.1 millimetres (1.5 inches) external diameter and 20.1 millimetres (0.79 inches) internal diameter, and crank pin end portion 52 an external diameter of 31.8 millimetres (1.25 inches) and an internal diameter of 18.3 millimetres (0.72 inches) so that the crank pin end wall thickness is about 6.6 millimetres (0.26 inches) prior to assembly. After the crank pin end portions are inserted into the off-axis apertures 22, a first hardened ball 58 having a diameter of about 0.13 millimetres (0.005 inches) greater than the internal diameter of the crank pin end portion is forced through the crank pin 24, and then second and third balls are successively forced through the crank pin, each ball 58 being about 0.13 millimetres (0.005 inches) greater in diameter than the previous ball, so that the crank pin end portions are progressively expanded into tight conformity with the off-axis apertures. The internal diameter of the crank pin body portion is larger than the largest ball so that it serves as a guide passage for the ball as it moves from one crank pin end portion 52 to another but produces no resistance to this movement. The intermediate main journal 14 may be larger in diameter, so that its end portion 56 wall thickness is about 8.4 millimetres (0.33 inches). The intermediate main journal end portions 56 are expanded after insertion into centre apertures 18 by balls of successively greater diameters.

By using more than one ball 58 for expansion, greater deformation can be attained and lower forces are needed to push the ball through the end portions. By this arrangement it is possible to expand a tubular element selectively by the provision of an internal diameter smaller than the balls where expansion is desired and a larger internal diameter where expansion is not desired. Thus, it is not required to expand both ends of a tubular shaft. The end main journals 12 are attached to the outer counterweights 16 by only one main journal end portion 57, and thus only that one end portion has a small internal diameter for expansion by a ball. It is evident then, that the small internal diameter may be located wherever desired in the tubular shaft and may be intermediate the ends, in addition to or instead of at an end.

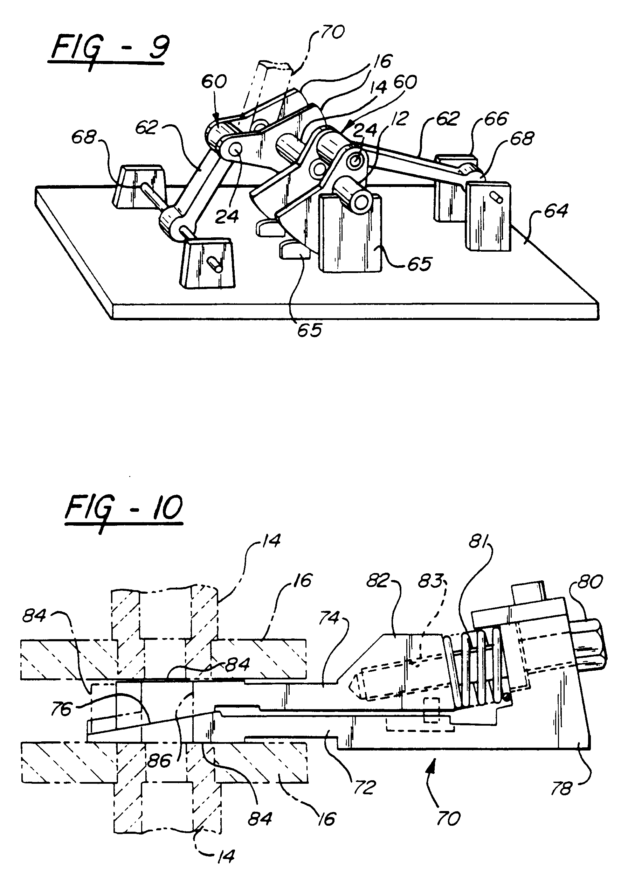

In assembling a crankshaft 10, there are several options for the order of assembly of the parts. For example, the assembly may start at one end of the crankshaft 10 and parts added in order of their location in the assembly, using a fixture to hold each part in position, and completing the joints by expansion of the end portions as each section, for example a crank pin 24 and its associated counterweights 16, is assembled. Alternatively, the parts can be placed in the fixture with end portions inserted into their respective apertures prior to completing the joints. Referring to Figure 9, it is also possible to assemble subassemblies 60 of a crank pin 24, its connecting rod 62 (with roller bearings, not shown) and associated counterweights 16 with the joints completed, and then combine the subassemblies by orienting the subassemblies 60 in a fixture 64 and installing the main journals 12,14. Locating members 65 engage various portions of the crankshaft parts to establish correct orientation and alignment. The free ends 66 of the connecting rods 62 are held in fixed points by locating rods 68, thereby controlling precisely the relative angle of the crank pins 24. Even if the end portions of the intermediate main journal 14 are inserted in the centre apertures 18 of the counterweights 16, they are not yet fixed and the crank pin 24 angles can be adjusted, as required, by the fixture 64. Then, when the subassemblies are properly oriented and aligned, the end portions of the main journals 12,14 are expanded, thereby completing the joints.

In order to expand the main journals 12,14 while in the fixture 64 shown in Figure 9, it is preferable to pass each ball 58 through all the main journals in a single pass. Since the main journals 12,14 are separated by axial spaces adjacent the crank pins 24, a fixture 70, shown in dashed lines in one such location, is provided to bridge the space and provide a passageway for the balls. Another function of such a fixture 70 is to transfer axial force from one main journal to another. This allows a clamping force for preventing axial growth of each main journal to be applied at each outboard end of the end main journals 12 and to be transmitted to the intermediate main journals 14.

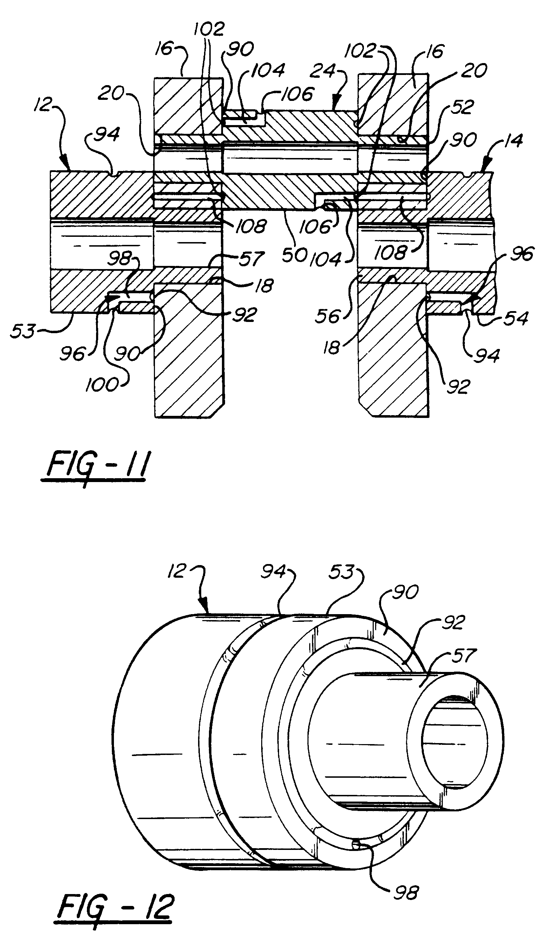

Figure 10 shows the fixture 70, which comprises first and second plates 72 and 74 which are relatively slidable along an axis and which have at one end cooperating ramp or wedge faces 76. At the other end, the plate 72 has a laterally extending head 78 including an aperture for receiving a hexagonally shaped head bolt 80. The other plate 74 has a body 82 with an internally threaded bore 83 for receiving the threaded end of the bolt 80. The bolt 80 is positioned with its axis parallel to the ramp faces and by turning the bolt 80 the plates are caused to slide at the ramp faces and the relative position of the plates 72 and 74 is controlled. A spring 81 disposed around the bolt 80 and between the plate 74 and head 78 urges the plate 74 in the release direction when the bolt is loosened. (The bolt 80 is used in a prototype fixture 70; an air pressure operated linear actuator is preferred for a production fixture.) The outboard faces 84 of the plates 72,74 at the one end are parallel and remain so during the sliding action, and the spacing of the faces 84 changes. At the smallest spacing of the outboard faces 84, as shown in phantom lines, the fixture 70 is inserted into the space between the counterweights 16 in line with the apertures 18. At that position, the bolt 80 is turned to increase the spacing of the faces 84, thereby expanding the fixture 70 tightly against the counterweights 16 and the ends of the intermediate main journals 14. Bores 86 in each of the plates 72,74 which are aligned with the axes of the main journals 12,14, when installed, allow the passage of the balls 58 when they move from one main journal to another. Thus, the bores 86 are larger than the balls 58 but are small enough to ensure that the faces 84 engage the ends of the main journals 12,14.

If such a fixture 70 is installed in each of the spaces between the main journal ends, a clamping force applied to the outer ends of the end main journals 12 will be exerted longitudinally through all the main journals 12,14 and the fixtures 70. The clamping force can be applied by mechanical or hydraulic apparatus like that shown in US-A-4,835,832.

It will be apparent that some of the crankshaft joints may be joined by expansion and other joints may be joined by other methods. For example, the crank pin 24 ends may be expanded onto the counterweights 16 and the main journals 12,14 may be press-fitted into the counterweights, or vice versa. Alternatively, the main journals 12,14 and counterweights 16 may be cast or forged as a unit and the crank pins 24 formed separately and joined by expansion.

An advantage to forming the crankshaft 10 from separate machined main journals 12,14 and crank pins 24 is an improved arrangement of oil passages in crankshafts for four-stroke engines. As shown in Figures 11 and 12, a pair of counterweights 16 are connected by a crank pin 24 with crank pin end portions 52 in off-axis apertures 20, and main journals 12 and 14 have their respective main journal end portions 57 and 56 assembled into axial centre apertures 18. The main journals 12,14 and the crank pin 24 have reduced diameter end portions 57,56,52 and planar shoulders 90 at the interface of the reduced diameter end portions and the body portions 53,54,50. An annular main journal groove 92 is formed in each shoulder 90 of a main journal 12,14 and is concentric with the axis of the main journal. Each main journal groove 92 is closed on one side by the face of the adjacent counterweight 16 to form a closed annular passage. Each main journal 12,14 has a circumferential main journal groove 94 around the main journal body portion 54 or 53 which receives oil under pressure from cylinder block oil galleys, not shown. An internal short main journal passage 96 comprising a short bore 98 parallel to the main journal axis and a short radial main journal bore 100 interconnecting the annular main journal groove 92 of each main journal with the respective circumferential main journal groove 94.

Similarly, each shoulder 90 of the crank pin 24 has an annular crank pin groove 102, and an internal short crank pin passage 104 with parallel and radial runs connects the annular crank pin groove 102 with a crank pin port 106 on the surface of the crank pin. The respective annular grooves 92 and 102 overlap on opposite sides of the counterweight 16 and are interconnected by a counterweight bore 108 through the counterweight perpendicular to the face of the counterweight. If crankshaft design requires that the annular grooves 92 and 102 not overlap but are radially spaced, a diagonal counterweight bore 108 through the counterweight 16 may be provided. In either case, oil supplied by the oil galley to the main journal groove 94 is fed through main journal passage 96, annular main journal groove 92, counterweight bore 108, annular crank pin groove 102 and crank pin passage 104 to the crank pin port 106 to lubricate the connecting rod bearing (not shown). Due to the annular grooves 92,102 in the shoulders 90, the counterweight bore 108 will intersect the annular grooves for any orientation of the main journals 12,14 and the crank pins 24, thereby facilitating the assembly of the crankshaft 10 parts.

## Claims

1. A shaft comprising a first member (16) including a bore (18,22) with a hardened surface and a lobe-shaped cross-section having an odd number of lobes (48); and a tubular shaft (12,14,24) including a surface hardened body portion (53,54,50) and a non-hardened joining portion (57,56,52), the joining portion having an inner diameter smaller than the inner diameter of the body portion, the joining portion having a shape substantially conforming with the bore and being secured to the first member.

2. A shaft according to claim 1, wherein the bore (18,22) includes at least one recess (51) in a surface thereof substantially filled with material of the tubular shaft (12,14,24) for providing resistance against withdrawal of the joining portion (57,56,52) from the bore.

3. A shaft according to claim 1 or 2, wherein the bore (18,22) includes at least one spline (49) in at least one of the lobes (48) thereof.

4. A shaft according to claim 1, 2 or 3, wherein the shaft is a crankshaft (10) of an engine, the first member being a counterweight (16), the bore being a centre bore (18) substantially aligned with the axis of rotation of the crankshaft, the tubular shaft being a main journal (12,14), the attachment of the joining portion (57,56) to the centre bore enabling torque transmission between the main journal and the counterweight.

5. A shaft according to claim 1, 2 or 3, wherein the shaft is a crankshaft (10) of an engine, the first member being a counterweight (16), the bore being an off-axis bore (22) radially spaced from the axis of rotation of the crankshaft, the tubular shaft being a crank pin (24).

6. A shaft according to claim 4 or 5, wherein the main journal (14) includes a second joining portion (52), the shaft including a disc-shaped seal plate (28) having its centre located substantially on the axis of rotation of the crankshaft, the seal plate including a seal plate bore substantially conforming to the shape of the second joining portion of the main journal.

7. A shaft according to claim 5, comprising a plurality of main journals (12,14) substantially aligned with the axis of rotation of the crankshaft; a plurality of tubular crank pins (24) located between the main journals and having longitudinal axes spaced from the crankshaft axis, each crank pin having a surface hardened body portion (50) and one or more non-hardened joining portions (52); the or each joining portion having an inner diameter smaller than the inner diameter of the body portion; a plurality of counterweights (16) each including a centre aperture (18) substantially aligned with the crankshaft axis for receiving a joining portion (57,56) of a main journal (12,14), the counterweights being secured to the joining portions of respective main journals for torque transmission between the main journals and the counterweights; the off-axis bore (22) in each counterweight adjoining a crank pin (24) for receiving a joining portion (52) of said crank pin.

8. A shaft according to claim 7, wherein each main journal (12,14) and associated counterweight centre bore (18) includes a tightly fitting splined joint (49) for transmitting rotation torque along the crankshaft.

9. A shaft according to claim 7 or 8, wherein the centre bore (18) of each counterweight (16) has a hardened surface and a lobe-shaped cross-section having an odd number of lobes (48) and at least one spline (49) in each lobe; each main journal (12,14) including a surface hardened main journal body portion (53,54) and non-hardened main journal joining portions (57,56), each main journal joining portion fitting into an associated centre bore and having a shape substantially conforming to the shape of the associated centre bore, each main journal joining portion having an inner diameter smaller than the diameter of its associated main journal body portion.

10. A shaft according to claim 9, wherein each centre bore (18) includes at least one recess (51) in a surface thereof substantially filled with material of a main journal joining portion (57,56) for providing resistance against withdrawal of the main journal joining portion from the centre bore.

11. A shaft according to any one of claims 7 to 10, wherein each counterweight (16) has a substantially circular axial cross-section having its centre lying substantially on the axis of rotation of the crankshaft; at least one of the crank pins (24) carrying a seal plate (28), the or each seal plate having a substantially circular axial cross-section with a centre lying substantially on the axis of rotation of the crankshaft, and including an off-centre bore (20) fitting over a respective crank pin and secured thereto; each seal plate and the counterweights including a circumferentially extending seal groove (26).

12. A shaft according to claim 11, wherein the body portion of each main journal (12,14) and crank pin (24) has an outer diameter greater than the outer diameter of the joining portions thereof, providing shoulders (90) at the interfaces of the body portion and the joining portions such that the joining portions fit into the respective centre and off-axis bores (18,20) and the shoulders abut the counterweight (16); one or more of the shoulders (90) of the main journals and crank pins including an annular groove (92) formed thereon to provide annular oil passages which communicate with oil conduits (98,104) formed in one or more of the main journals and crank pins, substantially parallel to the crankshaft axis, and radial passages (100,106) between the oil conduits and peripheral surfaces of said main journals and crank pins, and a counterweight passage (108) in each counterweight (16) for interconnecting the annular oil passages of the or each main journal and crank pin sharing a common counterweight so as to provide a continuous oil path from the peripheral surface of main journal to the peripheral surface of an adjoining crank pin.

13. A shaft according to claim 12, wherein each counterweight passage (108) is substantially parallel to the crankshaft axis.

14. A method of fitting a tubular element to a member comprising the steps of providing a first member (16) with a bore (18,22) of lobe-shaped cross-section having an odd number of lobes (48); providing a tubular element (12,14,24) having a body portion (53,54,50) and a joining portion (57,56,52) adapted to fit within the bore of the member, the joining portion having an inner diameter smaller than the inner diameter of the body portion; inserting the joining portion into the bore; restraining the tubular element against elongation thereof by application of a clamping force at either end thereof; and expanding the joining portion so as to become a tight fit in the bore of the member by forcing through the joining portion at least one hardened ball (58) having a diameter larger than the inner diameter of the joining portion and smaller than the inner diameter of the body portion.

15. A method according to claim 14, wherein the step of expanding the joining portion comprises the step of forcing a plurality of balls (58) sequentially through the joining portion, each successive ball being larger in diameter than the previous ball, thereby to expand the joining portion in stages.

16. A method according to claim 14 or 15, including the step of forming a circumferential groove (51) in a surface of the bore (18,22), the joining portion being expanded into the groove so as to be secured against axial movement in the bore.

17. A method according to claim 14, 15 or 16, including the step of forming a spline (49) in a surface of the bore, the joining portion being expanded into the splines so as to be secured against rotation in the bore.

18. A method according to any one of claims 14 to 17, wherein the method is adapted to fit at least one tubular element to a plurality of spaced members, each of which spaced members is provided with a bore (18,22) of lobe-shaped cross-section having an odd number of lobes; the method comprising the steps of providing first and second joining portions (57,56, 52) in the or at least one tubular element, each joining portion having an inner diameter smaller than the inner diameter of the or its respective body portion; aligning the bores of at least two members on a common axis; inserting the joining portions into their respective bores and forcing the or each hardened ball (58) through said at least two joining portions successively, thereby successively expanding said at least two joining portions.

19. A method according to claim 18, wherein said at least two joining portions (56,52) are the first and second joining portions of a tubular element (14,24).

20. A method according to claim 18, wherein said at least two joining portions are provided on separate spaced tubular elements (12,14,24), and the space between the tubular elements being bridged by a fixture (70) which includes a passage (86) slightly larger than the or each ball (58); the step of restraining the tubular element against elongation including the step of tightly fitting the fixture between the tubular elements so as to transmit clamping force from one tubular element to the other; the step of passing the or each ball from one joining portion to another including the step of passing the or each ball through the passage in the fixture.

21. A method according to claim 18, 19 or 20, wherein the method is adapted for assembling an engine crankshaft, each member being a counterweight (16) and the bore in each member being an off-axis bore lying in an axis spaced from the axis of rotation of the crankshaft, there being provided a plurality of tubular elements, each tubular element being a crank pin (24); the method comprising the steps of providing a central bore (18) in each counterweight and a plurality of main journals (12,14), each main journal being fitted into at least one central bore.

22. A method according to claim 21, including the steps of shaping the central bore in each counterweight so as to have a lobe-shaped cross-section having an odd number of lobes (48); forming on each main journal (12,14) a main journal body portion (53,54) and joining portions (57,56) adapted to fit within the respective central bores, the main journal joining portions having an inner diameter smaller than the inner diameter of the main journal body portion; and wherein the step of fitting each main journal into a respective bore comprises the steps of inserting the main journal joining portion into the respective central bore; restraining the main journal against elongation by application of a longitudinal clamping force at either end of the main journal; and expanding the main journal joining portion in the central bore by forcing through the main journal at least one hardened ball (58) having a diameter larger than the inner diameter of the main journal joining portion and smaller than the inner diameter of the main journal body portion.

23. A method according to claim 18, 19 or 20, wherein the method is adapted for assembling an engine crankshaft, each member being a counterweight (16) and the bore in each counterweight being a central bore (18) disposed substantially on the axis of rotation of the crankshaft, there being provided a plurality of tubular elements, each tubular element being a main journal (12,14); the method comprising the steps of providing an off-axis bore (22) in each counterweight and one or more crank pins (24), each crank pin being fitted in a respective off-axis bore.

24. A method according to claim 21, 22 or 23, wherein the crankshaft includes a plurality of connecting rods (62) attached to respective crank pins (24); the method including the steps of assembling subassemblies (60) of connecting rods, crank pins and counterweights (16); orienting a plurality of subassemblies with crank pins at the appropriate angles; and fitting the main journals to the counterweights.

25. A method according to claim 24, wherein the step or orienting a plurality of subassemblies with crank pins at appropriate angles comprises the steps of positioning each subassembly (60) with the central bore (18) on a predetermined axis; and positioning a free end of each connecting rod (62) at a predetermined location corresponding to the appropriate angle for each subassembly.

## Patentansprüche

1. Eine Welle mit einem ersten Bauteil (16), welches eine Bohrung (18, 22) mit einer gehärteten Oberfläche und einem mit Ausbuchtungen geformten Querschnitt mit einer ungeraden Anzahl von Ausbuchtungen (48) aufweist, und einer röhrenförmigen Welle (12, 14, 24), die einen oberflächengehärteten Körperabschnitt (53, 54, 50) und einen nichtgehärteten Verbindungsabschnitt (57, 56, 52) aufweist, wobei der Verbindungsabschnitt einen inneren Durchmesser aufweist, der kleiner ist als der innere Durchmesser des Körperabschnitts, und der Verbindungsabschnitt eine Form aufweist, die im wesentlichen der Bohrung entspricht, und an dem ersten Bauteil befestigt ist.

2. Eine Welle nach Anspruch 1,
worin die Bohrung (18, 22) wenigstens eine Ausnehmung (51) in einer Oberfläche davon umfaßt, die im wesentlichen mit Material der röhrenförmigen Welle (12, 14, 24) gefüllt ist, um einen Widerstand gegen ein Herausziehen des Verbindungsabschnitts (57, 56, 52) aus der Bohrung zu schaffen.

3. Eine Welle nach Anspruch 1 oder 2,
worin die Bohrung (18, 22) wenigstens eine Keilnut (49) in wenigstens einer der Ausbuchtungen (48) davon umfaßt.

4. Eine Welle nach Anspruch 1, 2 oder 3,
worin die Welle eine Kurbelwelle (10) eines Motors ist, wobei das erste Bauteil ein Gegengewicht (16) ist, die Bohrung eine Zentrumsbohrung (18) ist, die im wesentlichen mit der Drehachse der Kurbelwelle ausgerichtet ist, die röhrenförmige Welle ein Hauptzapfen (12, 14) ist und die Anbringung des Verbindungsabschnitts (57, 56) an der Zentrumsbohrung eine Drehmomentübertragung zwischen dem Hauptzapfen und dem Gegengewicht ermöglicht.

5. Eine Welle nach Anspruch 1, 2 oder 3,
worin die Welle eine Kurbelwelle (10) eines Motors ist, wobei das erste Bauteil ein Gegengewicht (16) ist, die Bohrung eine achsenentfernte Bohrung (22) ist, die radial von der Drehachse der Kurbelwelle beabstandet ist, und die röhrenförmige Welle ein Kurbelzapfen (24) ist.

6. Eine Welle nach Anspruch 4 oder 5,
worin der Hauptzapfen (14) einen zweiten Verbindungsabschnitt (52) umfaßt, wobei die Welle eine scheibenförmige Dichtplatte (28) umfaßt, deren Zentrum im wesentlichen auf der Drehachse der Kurbelwelle angeordnet ist, und die Dichtplatte eine Dichtplattenbohrung umfaßt, die im wesentlichen der Form des zweiten Verbindungsabschnitts des Hauptzapfens entspricht.

7. Eine Welle nach Anspruch 5,
mit einer Vielzahl von Hauptzapfen (12, 14), die im wesentlichen mit der Drehachse der Kurbelwelle ausgerichtet sind, einer Vielzahl von röhrenförmigen Kurbelzapfen (24), die zwischen den Hauptzapfen angeordnet sind und longitudinale Achsen aufweisen, die von der Kurbelwellenachse beabstandet sind, wobei jeder Kurbelzapfen einen oberflächengehärteten Körperabschnitt (50) und einen oder mehrere nichtgehärtete Verbindungsabschnitte (52) aufweist und der oder jeder Verbindungsabschnitt einen inneren Durchmesser aufweist, der kleiner ist als der innere Durchmesser des Körperabschnitts, einer Vielzahl von Gegengewichten (16), die jeweils eine Zentrumsöffnung (18) umfassen, die im wesentlichen mit der Kurbelwellenachse ausgerichtet ist, um einen Verbindungsabschnitt (57, 56) eines Hauptzapfens (12, 14) aufzunehmen, wobei die Gegengewichte an den Verbindungsabschnitten jeweiliger Hauptzapfen befestigt sind zur Drehmomentübertragung zwischen den Hauptzapfen und den Gegengewichten, wobei die achsenentfernte Bohrung (22) in jedem Gegengewicht an einen Kurbelzapfen (24) grenzt, um einen Verbindungsabschnitt (52) des Kurbelzapfens aufzunehmen.

8. Eine Welle nach Anspruch 7,
worin jeder Hauptzapfen (12, 14) und zugeordnete Gegengewichtzentrumsbohrung (18) eine eng sitzende, mit Keilnuten versehende Verbindung (49) umfaßt, um Rotationsdrehmoment entlang der Kurbelwelle zu übertragen.

9. Eine Welle nach Anspruch 7 oder 8,
worin die Zentrumsbohrung (18) jedes Gegengewichts (16) eine gehärtete Oberfläche und einen mit Ausbuchtungen geformten Querschnitt mit einer ungeraden Anzahl von Ausbuchtungen (48) und wenigstens einer Keilnut (49) in jeder Ausbuchtung aufweist, wobei jeder Hauptzapfen (12, 14) einen oberflächengehärteten Hauptzapfenkörperabschnitt (53, 54) und nichtgehärtete Hauptzapfenverbindungsabschnitte (57, 56) umfaßt, jeder Hauptzapfenverbindungsabschnitt in eine zugehörige Zentrumsbohrung paßt und eine Form aufweist, die im wesentlichen der Form der zugehörigen Zentrumsbohrung entspricht, und jeder Hauptzapfenverbindungsabschnitt einen inneren Durchmesser aufweist, der kleiner ist als der Durchmesser seines zugehörigen Hauptzapfenkörperabschnitts.

10. Eine Welle nach Anspruch 9,
worin jede Zentrumsbohrung (18) wenigstens eine Ausnehmung (51) in einer Oberfläche davon umfaßt, die im wesentlichen mit Material eines Hauptzapfenverbindungsabschnitts (57, 56) gefüllt ist, um einen Widerstand gegen ein Herausziehen des Hauptzapfenverbindungsabschnitts aus der Zentrumsbohrung zu schaffen.

11. Eine Welle nach einem der Ansprüche 7 bis 10,
worin jedes Gegengewicht (16) einen im wesentlichen kreisförmigen axialen Querschnitt aufweist, dessen Zentrum im wesentlichen auf der Drehachse der Kurbelwelle liegt, wobei wenigstens einer der Kurbelzapfen (24) eine Dichtplatte (28) trägt, die oder jede Dichtplatte einen im wesentlichen kreisförmigen axialen Querschnitt aufweist, wobei ein Zentrum im wesentlichen auf der Drehachse der Kurbelwelle liegt, und eine achsenentfernte Bohrung (20) umfaßt, die über einen jeweiligen Kurbelzapfen paßt und daran befestigt ist, und jede Dichtplatte und die Gegengewichte eine sich in Umfangsrichtung erstrekkende Dichtnut (26) umfassen.

12. Eine Welle nach Anspruch 11,
worin der Körperabschnitt jedes Hauptzapfens (12, 14) und Kurbelzapfens (24) einen äußeren Durchmesser aufweist, der größer ist als der äußere Durchmesser der Verbindungsabschnitte davon, wobei Schultern (90) an den Zwischenflächen des Körperabschnitts und der Verbindungsabschnitte vorgesehen sind, so daß die Verbindungsabschnitte in die jeweiligen Zentrums- und achsenentfernten Bohrungen (18, 20) passen und die Schultern an das Gegengewicht (16) stoßen, eine oder mehrere der Schultern (90) der Hauptzapfen und Kurbelzapfen eine ringförmige Nut (92), die darauf ausgebildet ist, um ringförmige Öldurchgänge zu schaffen, die mit Ölleitungen (98, 104), die in einem oder mehreren der Hauptzapfen und Kurbelzapfen ausgebildet sind, im wesentlichen parallel zur Kurbelwellenachse, und radialen Durchgängen (100, 106) zwischen den Ölleitungen und peripheren Oberflächen der Hauptzapfen und Kurbelzapfen kommunizieren, und einen Gegengewichtdurchgang (108) in jedem Gegengewicht (16) um-fassen, um die ringförmigen Öldurchgänge des oder jedes Hauptzapfens und Kurbelzapfens, die zu demselben Gegengewicht gehören, miteinander zu verbinden, um einen kontinuierlichen Ölweg von der peripheren Oberfläche des Hauptzapfens zur peripheren Oberfläche eines angrenzenden Kurbelzapfens zu schaffen.

13. Eine Welle nach Anspruch 12,
worin jeder Gegengewichtdurchgang (108) im wesentlichen parallel zur Kurbelwellenachse verläuft.

14. Ein Verfahren zum Anbringen eines röhrenförmigen Elementes an einem Bauteil, welches die Schritte umfaßt, daß ein erstes Bauteil (16), das eine Bohrung (18, 22) mit einem mit Ausbuchtungen geformten Querschnitt mit einer ungeraden Anzahl von Ausbuchtungen (48) aufweist, vorgesehen wird, daß ein röhrenförmiges Element (12, 14, 24) vorgesehen wird, welches einen Körperabschnitt (53, 54, 50) und einen Verbindungsabschnitt (57, 56, 52) aufweist, der so ausgebildet ist, daß er in die Bohrung des Bauteils paßt, wobei der Verbindungsabschnitt einen inneren Durchmesser aufweist, der kleiner ist als der innere Durchmesser des Körperabschnitts, daß der Verbindungsabschnitt in die Bohrung eingesetzt wird, daß das röhrenförmige Element durch Aufbringen einer Klemmkraft an seinen beiden Enden gegen eigene Längung gehalten wird, und daß der Verbindungsabschnitt erweitert wird, um einen engen Sitz in der Bohrung des Bauteils zu erlangen, indem durch den Verbindungsabschnitt wenigstens eine gehärtete Kugel (58) getrieben wird, die einen Durchmesser aufweist, der größer als der innere Durchmesser des Verbindungsabschnitts und kleiner als der innere Durchmesser des Körperabschnitts ist.

15. Ein Verfahren nach Anspruch 14,
worin der Schritt des Erweiterns des Verbindungsabschnitts den Schritt umfaßt, daß eine Vielzahl von Kugeln (58) der Reihe nach durch den Verbindungsabschnitt getrieben wird, wobei jede sukzessive Kugel einen größeren Durchmesser aufweist als die vorherige Kugel, um dadurch den Verbindungsabschnitt stufenweise zu erweitern.

16. Ein Verfahren nach Anspruch 14 oder 15,
welches den Schritt umfaßt, daß eine Umfangsnut (51) in einer Oberfläche der Bohrung (18, 22) ausgebildet wird, wobei der Verbindungsabschnitt in die Nut hinein erweitert wird, um gegen eine axiale Bewegung in der Bohrung gesichert zu werden.

17. Ein Verfahren nach Anspruch 14, 15 oder 16,
welches den Schritt umfaßt, daS eine Keilnut (49) in einer Oberfläche der Bohrung ausgebildet wird, wobei der Verbindungsabschnitt in die Keilnuten hinein erweitert wird, um gegen eine Rotation in der Bohrung gesichert zu werden.

18. Ein Verfahren nach einem der Ansprüche 14 bis 17,
worin das Verfahren ausgebildet ist, um wenigstens ein röhrenförmiges Element an einer Vielzahl von beabstandeten Bauteilen anzubringen, wobei jedes der beabstandeten Bauteile mit einer Bohrung (18, 22) mit einem mit Ausbuchtungen geformten Querschnitt mit einer ungeraden Anzahl von Ausbuchtungen versehen ist und das Verfahren die Schritte umfaßt, daß erste und zweite Verbindungsabschnitte (57, 56, 52) in dem oder dem wenigstens einen röhrenförmigen Element vorgesehen werden, wobei jeder Verbindungsabschnitt einen inneren Durchmesser aufweist, der kleiner ist als der innere Durchmesser des oder seines jeweiligen Körperabschnitts ist, daß die Bohrungen von wenigstens zwei Bauteilen auf einer gemeinsamen Achse ausgerichtet werden, und daß die Verbindungsabschnitte in ihre jeweiligen Bohrungen eingesetzt und die oder jede gehärtete Kugel (58) durch die wenigstens zwei Verbindungsabschnitte sukzessiv getrieben werden, wodurch die wenigstens zwei Verbindungsabschnitte sukzessiv erweitert werden.

19. Ein Verfahren nach Anspruch 18,
worin die wenigstens zwei Verbindungsabschnitte (56, 52) die ersten und zweiten Verbindungsabschnitte eines röhrenförmigen Elementes (14, 24) sind.

20. Ein Verfahren nach Anspruch 18,
worin die wenigstens zwei Verbindungsabschnitte auf separaten beabstandeten röhrenförmigen Elementen (12, 14, 24) vorgesehen sind, wobei der Raum zwischen den röhrenförmigen Elementen von einer Fixierung (70) überbrückt wird, die einen Durchgang (86) umfaßt, der geringfügig größer ist als die oder jede Kugel (58), der Schritt des Haltens des röhrenförmigen Elementes gegen Längung den Schritt umfaßt, daß die Fixierung eng zwischen den röhrenförmigen Elementen angebracht wird, um eine Klemmkraft von dem einen röhrenförmigen Element zu dem anderen zu übertragen, und der Schritt des Führens der oder jeder Kugel von dem einen Verbindungsabschnitt zu dem anderen den Schritt umfaßt, daß die oder jede Kugel durch den Durchgang in der Fixierung geführt wird.

21. Ein Verfahren nach Anspruch 18, 19 oder 20,
worin das Verfahren zum Zusammenbau einer Motorkurbelwelle ausgebildet ist, wobei jedes Bauteil ein Gegengewicht (16) und die Bohrung in jedem Bauteil eine achsenentfernte Bohrung ist, die in einer Achse liegt, welche von der Drehachse der Kurbelwelle beabstandet ist, eine Vielzahl von röhrenförmigen Elementen vorgesehen ist, jedes röhrenförmige Element ein Kurbelzapfen (24) ist und das Verfahren die Schritte umfaßt, daß eine zentrale Bohrung (18) in jedem Gegengewicht und eine Vielzahl von Hauptzapfen (12, 14) vorgesehen wird, wobei jeder Hauptzapfen in wenigstens eine zentrale Bohrung eingebracht wird.

22. Ein Verfahren nach Anspruch 21,
welches die Schritte umfaßt, daß die zentrale Bohrung in jedem Gegengewicht so geformt wird, daß sie einen mit Ausbuchtungen geformten Querschnitt mit einer ungeraden Anzahl von Ausbuchtungen (48) aufweist, daß auf jedem Hauptzapfen (12, 14) ein Hauptzapfenkörperabschnitt (53, 54) und Verbindungsabschnitte (57, 56) gebildet werden, die so ausgebildet sind, daß sie in die jeweiligen zentralen Bohrungen passen, wobei die Hauptzapfenverbindungsabschnitte einen inneren Durchmesser aufweisen, der kleiner ist als der innere Durchmesser des Hauptzapfenkörperabschnitts, und worin der Schritt des Einbringens jedes Hauptzapfens in eine jeweilige Bohrung die Schritte umfaßt, daß der Hauptzapfenverbindungsabschnitt in die jeweilige zentrale Bohrung eingesetzt wird, daß der Hauptzapfen durch Aufbringen einer longitudinalen Klemmkraft an beiden Enden des Hauptzapfens gegen Längung gehalten wird, und daß der Hauptzapfenverbindungsabschnitt in der zentralen Bohrung erweitert wird, indem durch den Hauptzapfen wenigstens eine gehärtete Kugel (58) getrieben wird, die einen Durchmesser aufweist, der größer als der innere Durchmesser des Hauptzapfenverbindungsabschnitts und kleiner als der innere Durchmesser des Hauptzapfenkörperabschnitts ist.

23. Ein Verfahren nach Anspruch 18, 19 oder 20,
worin das Verfahren zum Zusammenbau einer Motorkurbelwelle ausgebildet ist, wobei jedes Bauteil ein Gegengewicht (16) und die Bohrung in jedem Gegengewicht eine zentrale Bohrung (18) ist, die im wesentlichen auf der Drehachse der Kurbelwelle angeordnet ist, eine Vielzahl von röhrenförmigen Elementen vorgesehen ist, jedes röhrenförmige Element ein Hauptzapfen (12, 14) ist und das Verfahren die Schritte umfaßt, daß eine achsenentfernte Bohrung (22) in jedem Gegengewicht und ein oder mehrere Kurbelzapfen (24) vorgesehen werden, wobei jeder Kurbelzapfen in eine jeweilige achsenentfernte Bohrung eingebracht wird.

24. Ein Verfahren nach Anspruch 21, 22 oder 23,
worin die Kurbelwelle eine Vielzahl von Verbindungsstäben (62) umfaßt, die an jeweiligen Kurbelzapfen (24) angebracht sind, wobei das Verfahren die Schritte umfaßt, daß Unteranordnungen (60) aus Verbindungsstäben, Kurbelzapfen und Gegengewichten (16) zusammengesetzt werden, daß eine Vielzahl von Unteranordnungen mit Kurbelzapfen unter den geeigneten Winkeln orientiert werden, und daß die Hauptzapfen an den Gegengewichten angebracht werden.

25. Ein Verfahren nach Anspruch 24,
worin der Schritt des Orientierens einer Vielzahl von Unteranordnungen mit Kurbelzapfen unter geeigneten Winkeln die Schritte umfaßt, daß jede Unteranordnung (60) mit der zentralen Bohrung (18) auf einer vorbestimmten Achse positioniert wird, und daß ein freies Ende jedes Verbindungsstabs (62) an einer vorbestimmten Stelle entsprechend dem geeigneten Winkel für jede Unteranordnung positioniert wird.

## Revendications

1. Arbre comportant un premier élément (16) comportant un alésage (18, 22) ayant une surface durcie et une coupe transversale en forme de lobes ayant un nombre impair de lobes (48), et un arbre tubulaire (12, 14, 24) comportant une partie de corps (53, 54, 50) durcie en surface et une partie de liaison (57, 56, 52) non-durcie, la partie de liaison ayant un diamètre intérieur plus petit que le diamètre intérieur de la partie de corps, la partie de liaison ayant une forme se conformant pratiquement à l'alésage et étant fixée sur le premier élément.

2. Arbre selon la revendication 1, dans lequel l'alésage (18, 22) comporte au moins un premier évidement (51) dans sa surface, à peu près rempli par le matériau de l'arbre tubulaire (12, 14, 24), pour assurer la résistance à l'encontre d'une extraction de la partie de liaison (57, 56, 52) à partir de l'alésage.

3. Arbre selon la revendication 1 ou 2, dans lequel l'alésage (18, 22) comporte au moins une cannelure (49) agencée dans au moins un de ses lobes (48).

4. Arbre selon l'une quelconque des revendications 1, 2 ou 3, dans lequel l'arbre est un vilebrequin (10) de moteur, le premier élément étant un contrepoids (16), l'alésage étant un alésage central (18) pratiquement aligné avec l'axe de rotation du vilebrequin, l'arbre tubulaire étant un tourillon principal (12, 14), la fixation de la partie de liaison (57, 56) dans l'alésage central permettant la transmission d'un couple entre le tourillon principal et le contrepoids.

5. Arbre selon l'une quelconque des revendications 1, 2 ou 3, dans lequel l'arbre est un vilebrequin (10) de moteur, le premier élément étant un contrepoids (16), l'alésage étant un alésage excentré (22) radialement écarté de l'axe de rotation du vilebrequin, l'arbre tubulaire étant un maneton de manivelle (24).

6. Arbre selon la revendication 4 ou 5, dans lequel le tourillon principal (14) comporte une seconde partie de liaison (52), l'arbre comportant une plaque d'étanchéité (28) en forme de disque ayant son axe situé pratiquement sur l'axe de rotation du vilebrequin, la plaque d'étanchéite comportant un alésage de plaque d'étanchéité se conformant pratiquement à la forme de la seconde partie de liaison du tourillon principal.

7. Arbre selon la revendication 5, comportant plusieurs tourillons principaux (12, 14) pratiquement alignés avec l'axe de rotation du vilebrequin, plusieurs manetons de manivelle tubulaires (24) situés entre les tourillons principaux et ayant des axes longitudinaux écartés de l'axe du vilebrequin, chaque maneton de manivelle ayant une partie de corps (50) durcie en surface et une ou plusieurs parties de liaison (52) non-durcies, la partie de liaison ou chaque partie de liaison ayant un diamètre intérieur plus petit que le diamètre intérieur de la partie de corps, plusieurs contrepoids (16) comportant chacun une ouverture centrale (18) pratiquement alignée avec l'axe du vilebrequin pour recevoir une partie de liaison (57, 56) d'un tourillon principal (12, 14), les contrepoids étant fixés sur les parties de liaison des tourillons principaux respectifs pour transmettre un couple entre les tourillons principaux et les contrepoids, l'alésage excentré (22) de chaque contrepoids rejoignant un maneton de manivelle (24) pour recevoir une partie de liaison (52) dudit maneton de manivelle.

8. Arbre selon la revendication 7, dans lequel chaque tourillon principal (12, 14) et chaque alésage central (18) de contrepoids associé comportent une liaison cannelée (49) agencée avec serrage pour transmettre un couple de rotation le long de l'arbre de vilebrequin.

9. Arbre selon la revendication 7 ou 8, dans lequel l'alésage central (18) de chaque contrepoids (16) a une surface durcie et une coupe transversale en forme de lobes ayant un nombre impair de lobes (48) et au moins une cannelure (49) dans chaque lobe, chaque tourillon principal (12, 14) comportant une partie de corps (53, 54) de tourillon principal durcie en surface et des parties de liaison (57, 56) du tourillon principal nondurcies, chaque partie de liaison de tourillon principal étant agencée dans un alésage central associé et ayant une forme se conformant pratiquement à la forme de l'alésage central associé, chaque partie de liaison de tourillon principal ayant un diamètre intérieur plus petit que le diamètre de sa partie de corps de tourillon principal associée.

10. Arbre selon la revendication 9, dans lequel chaque alésage central (18) comporte au moins un évidement (51) dans sa surface, pratiquement rempli de matériau d'une partie de liaison (57, 56) de tourillon principal pour assurer la résistance à l'encontre d'une extraction de la partie de liaison de tourillon principal à partir de l'alésage central.

11. Arbre selon l'une quelconque des revendications 7 à 10, dans lequel chaque contrepoids (16) a une section transversale à l'axe pratiquement circulaire ayant son centre situé pratiquement sur l'axe de rotation du vilebrequin, au moins un des manetons de manivelle (24) supportant une plaque d'étanchéité (28), la plaque d'étanchéité ou chaque plaque d'étanchéité ayant une section transversale à l'axe pratiquement circulaire, son centre étant situé pratiquement sur l'axe de rotation du vilebrequin, et comportant un alésage excentré (20) agencé sur un maneton de manivelle respectif et fixé sur celui-ci, chaque plaque d'étanchéité et les contrepoids comportant une gorge d'étanchéité (26) s'étendant circonférentiellement.

12. Arbre selon la revendication 11, dans lequel la partie de corps de chaque tourillon principal (12, 14) et de maneton de manivelle (24) a un diamètre extérieur plus grand que le diamètre extérieur des parties de liaison de ceux-ci, fournissant des épaulements (90) situés au niveau des interfaces de la partie de corps et des parties de liaison de telle sorte que les parties de liaison soient agencées dans les alésages centraux et les alésages excentrés (18, 20) respectifs et que les épaulements viennent en butée contre le contrepoids (16), un ou plusieurs des épaulements (90) des tourillons principaux et des manetons de manivelle comportant une gorge annulaire (92) qui est formée dans ceux-ci pour fournir des passages d'huile annulaires qui communiquent avec des conduits d'huile (98, 104) formés dans un ou plusieurs des tourillons principaux et manetons de manivelle, pratiquement parallèles à l'axe de vilebrequin, et des passages radiaux (100, 106) situés entre les conduits d'huile et les surfaces périphériques desdits tourillons principaux et manetons de manivelle, et un passage (108) de contrepoids situé dans chaque contrepoids (16) pour relier mutuellement les passages d'huile annulaires du tourillon principal et du maneton de manivelle ou de chacun de ceux-ci en utilisant un contrepoids commun de manière à fournir un trajet d'huile continu depuis la surface périphérique d'un tourillon principal jusqu'à la surface périphérique d'un maneton de manivelle adjacent.

13. Arbre selon la revendication 12, dans lequel chaque passage (108) de contrepoids est pratiquement parallèle à l'axe du vilebrequin.

14. Procédé d'agencement d'un élément tubulaire sur un élément comportant les étapes consistant à fournir un premier élément (16) muni d'un alésage (18, 22) ayant une coupe transversale en forme de lobes comportant un nombre impair de lobes (48), fournir un élément tubulaire (12, 14, 24) ayant une partie de corps (53, 54, 50) et une partie de liaison (57, 56, 52) adaptée pour être agencée à l'intérieur de l'alésage de l'élément, la partie de liaison ayant un diamètre intérieur plus petit que le diamètre intérieur de la partie de corps, insérer la partie de liaison à l'intérieur de l'alésage, retenir l'élément tubulaire à l'encontre d'une élongation de celui-ci par application d'une force de serrage au niveau de l'une ou l'autre extrémité de celui-ci, et expanser la partie de liaison de manière à ce qu'elle devienne agencée serrée dans l'alésage de l'élément en faisant passer en force à travers la partie de liaison au moins une bille (58) durcie ayant un diamètre plus grand que le diamètre intérieur de la partie de liaison et plus petit que le diamètre intérieur de la partie de corps.

15. Procédé selon la revendication 14, dans lequel l'étape consistant à expanser la partie de liaison comporte l'étape consistant à faire passer en force plusieurs billes (58) en séquence à travers la partie de liaison, chaque bille successive ayant un diamètre plus grand que la bille précédente, pour expanser ainsi par étage la partie de liaison.

16. Procédé selon la revendication 14 ou 15, comportant l'étape consistant à former une gorge circonférentielle (51) dans une surface de l'alésage (18, 22), la partie de liaison étant expansée à l'intérieur de la gorge de manière à être fixée à l'encontre d'un déplacement axial dans l'alésage.

17. Procédé selon l'une quelconque des revendications 14, 15 ou 16, comportant l'étape consistant à former une cannelure (49) dans une surface de l'alésage, la partie de liaison étant expansée à l'intérieur des cannelures de manière à être fixée à l'encontre d'une rotation dans l'alésage.

18. Procédé selon l'une quelconque des revendications 14 à 17, dans lequel le procédé est adapté pour agencer au moins un élément tubulaire sur plusieurs éléments espacés, chacun desdits éléments espacés étant muni d'un alésage (18, 22) ayant une coupe transversale en forme de lobes ayant un nombre impair de lobes, le procédé comportant les étapes consistant à fournir une première et une seconde parties de liaison (57, 56, 52) dans l'élément tubulaire ou au moins un élément tubulaire, chaque partie de liaison ayant un diamètre intérieur plus petit que le diamètre intérieur de la partie de corps respective ou de sa partie de corps respective, aligner les alésages d'au moins deux éléments sur un axe commun, insérer les parties de liaison à l'intérieur de leurs alésages respectifs et faire passer en force la bille durcie (58) ou chaque bille durcie à travers lesdites au moins deux parties de liaison successivement, en expansant ainsi successivement lesdites au moins deux parties de liaison.

19. Procédé selon la revendication 18, dans lequel lesdites au moins deux parties de liaison (56, 52) sont la première et la seconde parties de liaison d'un élément tubulaire (14, 24).

20. Procédé selon la revendication 18, dans lequel lesdites au moins deux parties de liaison sont agencées sur des éléments tubulaires espacés séparés (12, 14, 24) et l'espace existant entre les éléments tubulaires étant relié par un pont par l'intermédiaire d'un accessoire (70) qui comporte un passage (86) légèrement plus grand que la bille (58) ou que chaque bille, l'étape consistant à retenir l'élément tubulaire à l'encontre d'une élongation comportant l'étape consistant à agencer de manière serrée l'accessoire entre les éléments tubulaires de manière à transmettre une force de serrage depuis un premier élément tubulaire vers l'autre, l'étape consistant à faire passer la bille ou chaque bille depuis une première partie de liaison vers l'autre comportant l'étape consistant à faire passer la bille ou chaque bille à travers le passage existant dans l'accessoire.

21. Procédé selon l'une quelconque des revendications 18, 19 ou 20, dans lequel le procédé est adapté pour assembler un vilebrequin de moteur, chaque élément étant un contrepoids (16) et l'alésage existant dans chaque élément étant un alésage excentré situé sur un axe espacé de l'axe de rotation du vilebrequin, plusieurs éléments tubulaires étant agencés, chaque élément tubulaire étant un maneton de manivelle (24), le procédé comportant les étapes consistant à fournir un alésage central (18) dans chaque contrepoids et plusieurs tourillons principaux (12, 14), chaque tourillon principal étant agencé à l'intérieur d'au moins un alésage central.

22. Procédé selon la revendication 21, comportant les étapes consistant à mettre en forme l'alésage central de chaque contrepoids de manière à ce qu'il ait une section transversale en forme de lobes comportant un nombre impair de lobes (48), former sur chaque tourillon principal (12, 14) une partie de corps (53, 54) de tourillon principal et des parties de liaison (57, 56) adaptées pour être agencées à l'intérieur des alésages centraux respectifs, les parties de liaison de tourillon principal ayant un diamètre intérieur plus petit que le diamètre intérieur de la partie de corps du tourillon principal, et dans lequel l'étape consistant à agencer chaque tourillon principal à l'intérieur d'un alésage respectif comporte les étapes consistant à insérer la partie de liaison du tourillon principal à l'intérieur de l'alésage central respectif, retenir le tourillon principal à l'encontre d'une élongation par application d'une force de serrage longitudinale au niveau de l'une ou l'autre extrémité du tourillon principal, et expanser la partie de liaison du tourillon principal située dans l'alésage central en faisant passer en force à travers le tourillon principal au moins une bille durcie (58) ayant un diamètre plus grand que le diamètre intérieur de la partie de liaison du tourillon principal et plus petit que le diamètre intérieur de la partie de corps du tourillon principal.

23. Procédé selon l'une quelconque des revendications 18, 19 ou 20, dans lequel le procédé est adapté pour assembler un vilebrequin de moteur, chaque élément étant un contrepoids (16) et l'alésage existant dans chaque contrepoids étant un alésage central (18) agence pratiquement sur l'axe de rotation du vilebrequin, plusieurs éléments tubulaires étant fournis, chaque élément tubulaire étant un tourillon principal (12, 14), le procédé comportant les étapes consistant à fournir un alésage excentré (22) dans chaque contrepoids et un ou plusieurs manetons de manivelle (24), chaque maneton de manivelle étant agencé dans un alésage excentré respectif.

24. Procédé selon l'une quelconque des revendications 21, 22 ou 23, dans lequel le vilebrequin comporte plusieurs tiges de liaison (62) fixées sur des manetons de manivelle respectifs (24), le procédé comportant les étapes consistant à assembler des sous-ensembles (60) constitués des tiges de liaison, des manetons de manivelle et des contrepoids (16), orienter plusieurs des sous-ensembles de manière à ce que les manetons de manivelle aient des angles appropriés, et agencer les tourillons principaux sur les contrepoids.

25. Procédé selon la revendication 24, dans lequel l'étape consistant à orienter plusieurs des sous-ensembles en ayant des manetons de manivelle situés selon des angles appropriés comporte l'étape consistant à positionner chaque sous-ensemble (60) en ayant l'alésage central (18) sur un axe prédéterminé, et positionner une extrémité libre de chaque tige de liaison (62) au niveau d'un emplacement prédéterminé correspondant à l'angle approprié de chaque sous-ensemble.
